# EUROPEAN PATENT SPECIFICATION

(11) **EP 0 841 236 B1**
(45) Date of publication and mention of the grant of the patent: **28.08.2002**
(21) Application number: 97203451.6
(22) Date of filing: 06.11.1997
(51) Int. Cl.: B62D 1/18

(54) **Four-way adjustable pedestal floor mounted steering column for a combine harvester**
Vierfach verstellbare, sockelbodenbefestigte Lenksäule für einen Mähdrescher
Colonne de direction quatre fois réglable et piédestal monté sur plancher pour moissonneuse-batteuse

(30) Priority: 12.11.1996 US 30498 P; 24.02.1997 US 803793
(43) Date of publication of application: 13.05.1998
(73) Proprietor: NEW HOLLAND BELGIUM N.V., B-8210 Zedelgem (BE)
(72) Inventor: Stoner, Kurt B., Seven Valleys, PA 17360 (US); Stauffer, David B., New Holland, PA 17557 (US); Abreu, Pedro C., New Holland, PA 17557 (US)
(74) Representative: Vandenbroucke, Alberic

(56) References cited:
- EP-A- 0 315 823
- US-A- 2 937 881
- US-A- 5 439 252

## Description

This invention relates to the improvement of a steering column in the cab of an agricultural combine harvester. More specifically it relates to a steering column which may be adjusted in four directions.

Mechanical harvesting of grain has taken place for decades. However, efforts continue in the attempt to make harvesting operations more efficient and effective. A combine harvester generally includes a header which cuts the crop. The header than moves the cut crop into a feeder house, which lifts the cut crop into the threshing and separation areas of the combine. The grain is separated, from the stalk by a rotor. The grain is then moved and stored in a grain tank. The chaff and trash is deposited from the rear of the combine. An operator usually runs these various operations from a glass-enclosed cab. Typically, a cab is located behind the cutting header and in front of the threshing and separation areas of the combine. An operator can observe most of the combine activities from the cab. During harvesting periods it is not uncommon for the combine to be operated for an extended time. Sometimes a single operator will use a combine for 16 to 18 hours a day. Furthermore, several operators may alternate in the use of the combine. Therefore is it necessary to provide a cab which will allow maximum operator comfort and flexibility. This will permit the operator to remain mentally alert for the long time intervals needed to harvest crops. One aspect of maintaining the operator's alertness is to provide a steering column that may be manipulated to a comfortable position. Equally important is to provide a steering column which is located in a manner to allow an unobstructed view of the various combine operations. It would also be advantageous to provide a steering column which would be suitable to different sized individuals. Finally it would be desirable to provide an steering column that is relatively impervious to the harsh off-road environment common in farming operations.

The effort to design and manufacture an acceptable steering column for farm operations is considerable. The research effort has followed several paths. Many steering columns use a single telescoping portion. This feature allows the steering wheel to be moved either closer or further from the operator. An additional improvement provides for a pivot assembly to allow the column to be positioned in a variety of angles. Initially, a ratchet mechanism has been used to control the pivoting motion. Later, gas cylinders were introduced to allow the steering column to be positioned in infinite range of angles. However, each of these approaches has limitations and drawbacks. Typically, these steering columns were placed in automobiles into a vertical wall, such as the firewall. Therefore, it is necessary to provide only a steering column with two ranges of motion (rotation around the pivot axis and translation along the steering column). However, in a harvester combine such a design is undesirable. The placement of a steering column on a vertical surface would obstruct the operator's view of the header. It is possible to affix a steering column to the horizontal cab floor. However, it is difficult for operators of different sizes to position the steering column in manner which is both comfortable and which does not obstruct the view.

The prior art illustrates these and additional difficulties. US-A-4,733,745 discloses an adjustable control attachment for an earth moving vehicle. The steering column is capable of rotation around the base. The drawback to this design is that a smaller individual would need to move the operator's seat rearward, this would move the operator away from any floor pedals. Additionally, the lower portion of the steering column may obstruct the operator's view.

US-A-4,993,279 discloses a tilt steering column latch release. This column again has a single pivot axis, but also possesses a release mechanism to allow the steering column to move to a lower position to allow easy maintenance.

US-A-5,088,342 discloses a pivotable steering wheel mechanism and biasing means. The steering column again possesses a single pivoting point which could limit the operator's range of vision.

US-A-5,168,768 discloses a tilt steering column assembly. The steering column has a single pivot and is capable of being moved back into the original position after being moved.

US-A-5,035,446 and US-A-4,972,732 disclose tilt-telescope steering column for automobiles. Both devices are designed to be attached to a vertical surface. The steering column can telescope and can tilt. The lower portion of the column is fixed and could obstruct an operator's view.

US-A-5,439,252 relates to a dual pivot steering column having an intermediate telescoping portion between the upper and lower pivots. The column is mounted to an upright bracket which would obstruct an operator's view when mounted on a harvesting machine. Once the height and the inclination of the steering wheel have been selected and fixed to suit a particular operator, also the position of the intermediate portion is fixed simultaneously. For most operators this portion still obstructs their view on the header below and in front of the steering platform of the harvester.

Consequently, the need exists for a steering column which will provide an unobstructed view of farming operations by being able to move in four directions.

According to the invention, there is provided an adjustable floor mounted steering column comprising:
a base support affixed to a substantially horizontal floor;
a lower pivot assembly, pivotally affixed to the base support for enabling pivotal movement of said lower pivot assembly about a lower horizontal axis, said lower pivot assembly comprising slideable means, which enable translation of said steering column in a direction defined substantially by the longitudinal axis of said slideable means;
an upper pivot assembly, pivotally affixed to the lower pivot assembly for enabling pivotal movement of said upper pivot assembly to said lower pivot assembly about an upper horizontal axis; and
an input shaft located substantially coaxially with the upper pivot assembly, the lower pivot assembly and base support, said input shaft having a steering wheel for transmitting a rotational force placed on the steering wheel,
characterized in that:
said input shaft comprises an upper telescoping shaft to which said steering wheel is affixed and which enables translation of said steering column in a direction defined by the axis of said telescoping shaft; and
said input shaft is provided with a upper locking knob in the centre of said steering wheel for controlling the vertical position of said upper telescoping shaft.

Consequently there is provided a floor mounted steering column which has two pivot axes and two telescoping sections.

For ease of operation, gas cylinders may be used to alter the position of the steering column. Such cylinders may be controlled by means of a foot pedal.

Such steering column can accommodate a variety of individuals regardless of their size.

The use of an input shaft comprising universal joints enables transmission of the rotation placed on the steering wheel to a steering motor, even if the column has two pivot points.

Advantageously a cover may be provided, which can be placed over the steering column thus preventing damage to the mechanism. Such cover preferably covers the steering column regardless of the position the column is placed. The cover may comprise a flexible boot surrounding the base support. Preferably, above the boot is a non-flexible lower cover with a lower region and first concave portion. The lower region is inserted into the boot. Above the lower cover is the non-flexible middle cover with a second concave portion and upper region. The second concave portion generally covers the first concave portion. The upper region is inserted into an upper cover.

By way of example, an elongated key on the exterior circumference of the inner input shaft transfers the torque to a key slot on the interior circumference of the outer input shaft. The outer input shaft is connected to the lower input shaft which is connected to the steering motor.

The lower pivot assembly is also capable of telescoping upwards or downwards by loosening the lower locking knob.

A steering column in accordance with the present invention will now be described in further detail, by way of example, with reference to the following drawings, in which:

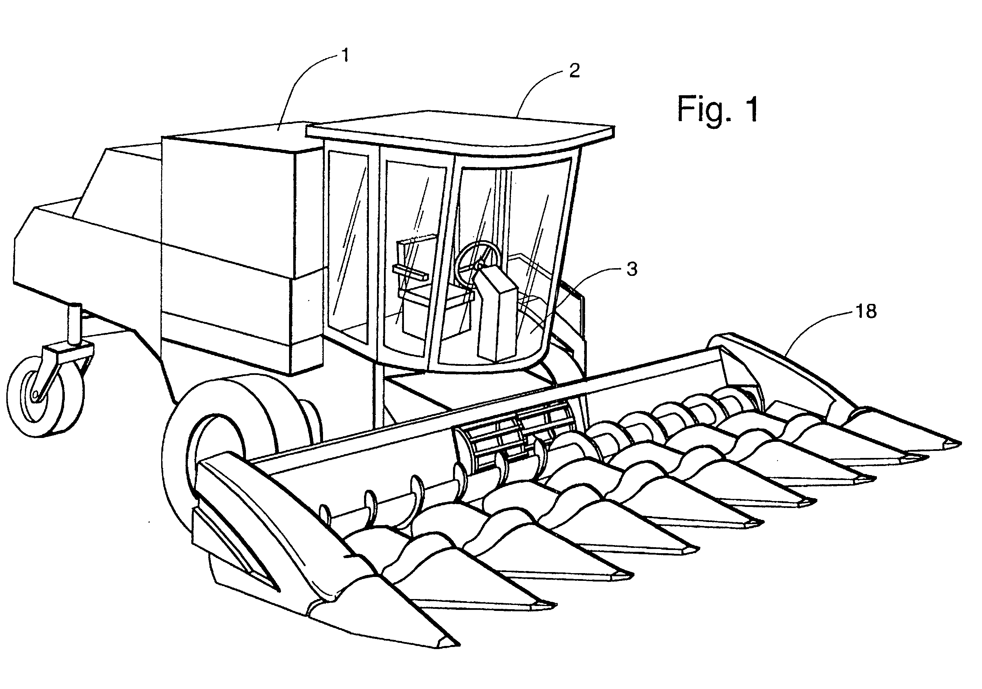

Figure 1 is a general view of a combine harvester combine with a cab containing a steering column;
Figure 2 is side view of the cab illustrating the prior art steering column arrangement;
Figure 3 is a side view of the cab illustrating a steering column according to the present invention, with the steering column in a stowed position for entrance and egress to the operator's seat;
Figure 4 is a side view of the cab illustrating the steering column of Figure 3 in the convention driving position, the phantom lines illustrating the ability for the operator to tilt or telescope the upper shaft;
Figure 5 is a side view of the cab illustrating the steering column of Figure 3 in the horizontal driving position for an operator having a small build;
Figure 6 is a side view of the cab illustrating the steering column of Figure 3 in the horizontal driving position for an operator having a large build;
Figure 7 is an exploded view of the steering column of Figure 3;
Figure 8 is a front view of the steering column of Figure 3 showing the covers;

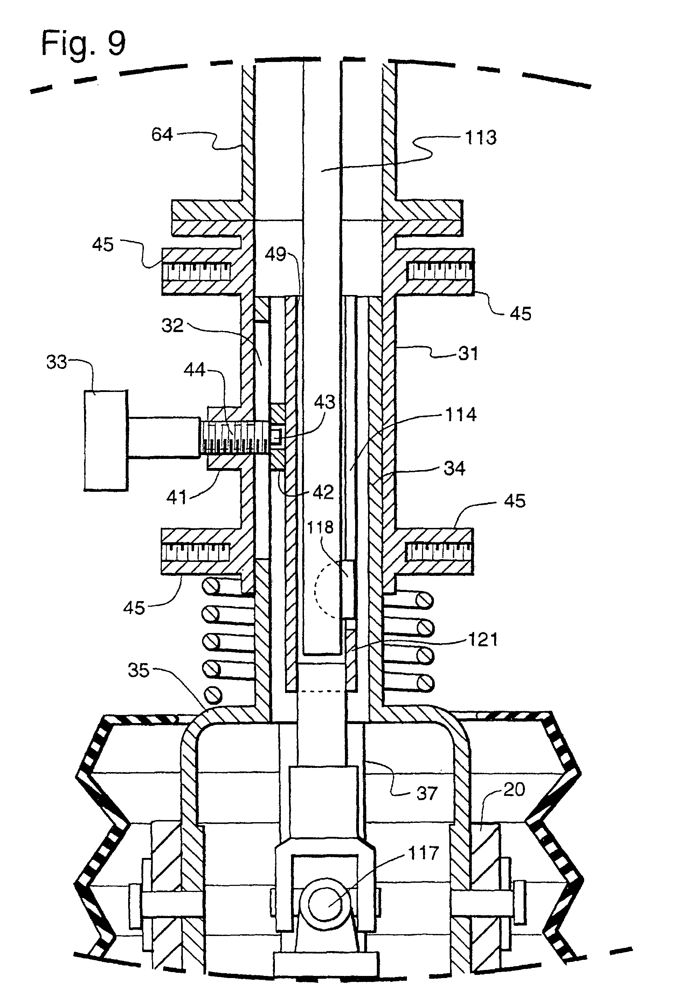

Figure 9 is an enhanced view of the lower locking knob, first lower telescoping shaft, second lower telescoping shaft, outer input shaft and inner input shaft; and
Figure 10 is a view illustrating the range of motion of the steering column.

Referring to the drawings, it is possible to observe the major elements and general operation of the present invention. Left and right references are used as a matter of convenience and are determined by standing at the rear of the combine and facing the forward end in the normal direction of travel. Likewise, forward and rearward are determined by normal direction of travel of the combine. Upward or downward orientations are relative to the ground or operating surface. Horizontal or vertical planes are also relative to ground.

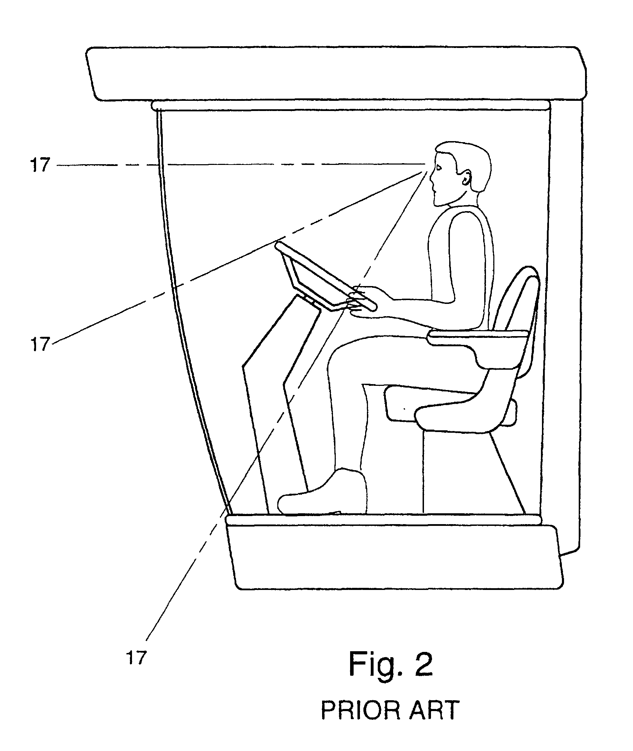

The steering column 10 is located v thin the cab 2 of a combine 1. A typical combine has a header 18 for cutting a crop. As the combine 1 and header 18 are moved forward, the grain and stalk are cut by the header. The header 18 moves the grain into an auger trough. A transverse auger pushes the grain and stalk in the auger trough to the centre of the header. Located at the centre of the header is the feeder house or elevator. The feeder house moves the grain and stalk rearward into the threshing and separation systems of the combine 1. After processing and separation, the processed grain is stored in a grain tank located near the top of the combine. The trash or chaff is ejected from the rear of the combine. The operator runs the combine 1 from the cab 2 located behind the header 18 and at the front of the combine. From the cab the operator can observe most the various combine functions. The cab 2 usually has a large glass window or several windows which afford the operator the maximum ability to monitor the header 18. Located in the centre of the cab 2 is the steering column 10 with a steering wheel 90 attached. By turning the steering wheel 90, the operator manipulates various elements within the steering column 10 which, in turn, controls a steering motor 24 which turns the wheels of the combine. Located behind the steering column 10 is an operator's chair. The prior art steering column is illustrated by Figure 2. The operation has a partially obstructed view 17 when looking downwards and out of the cab. This steering column is blocking a portion of the operator's view.

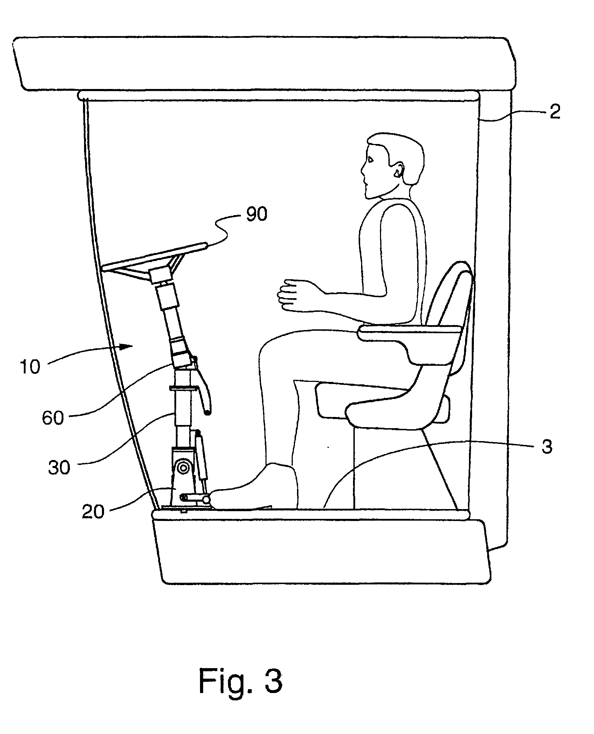

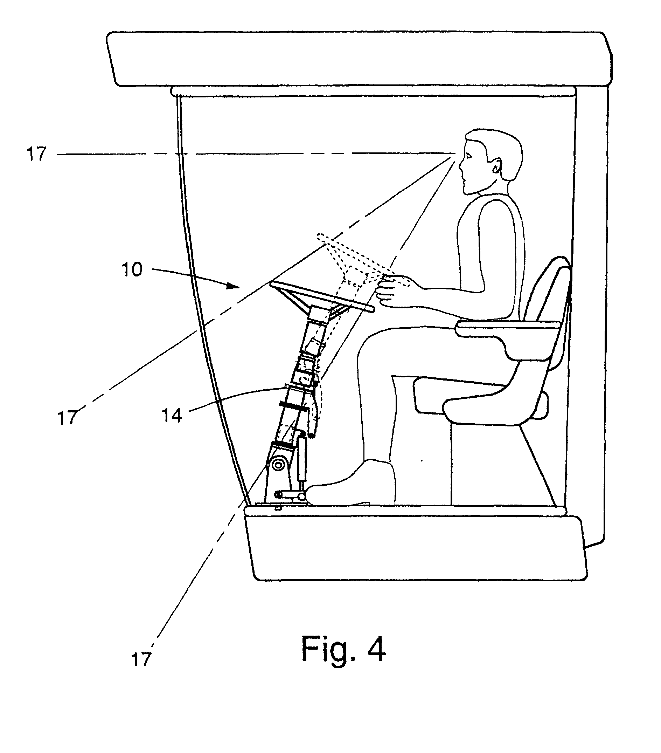

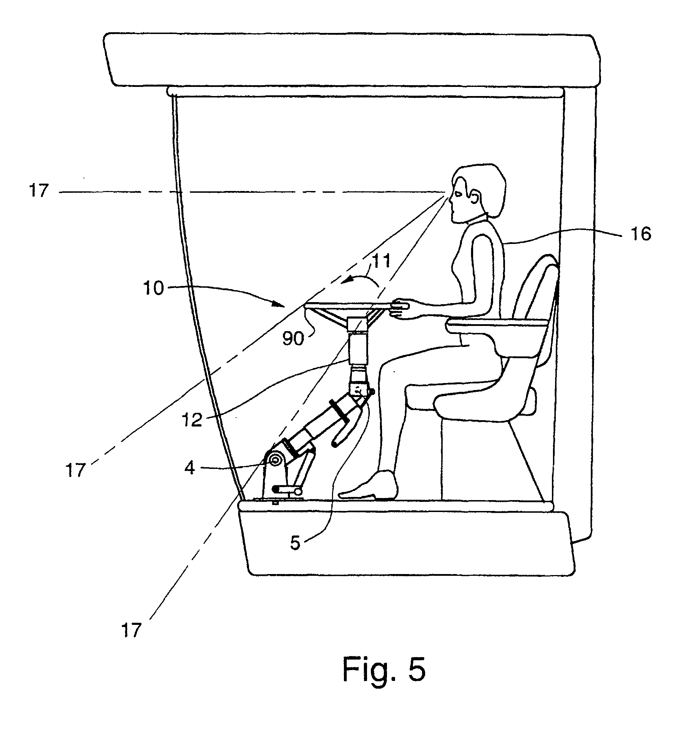

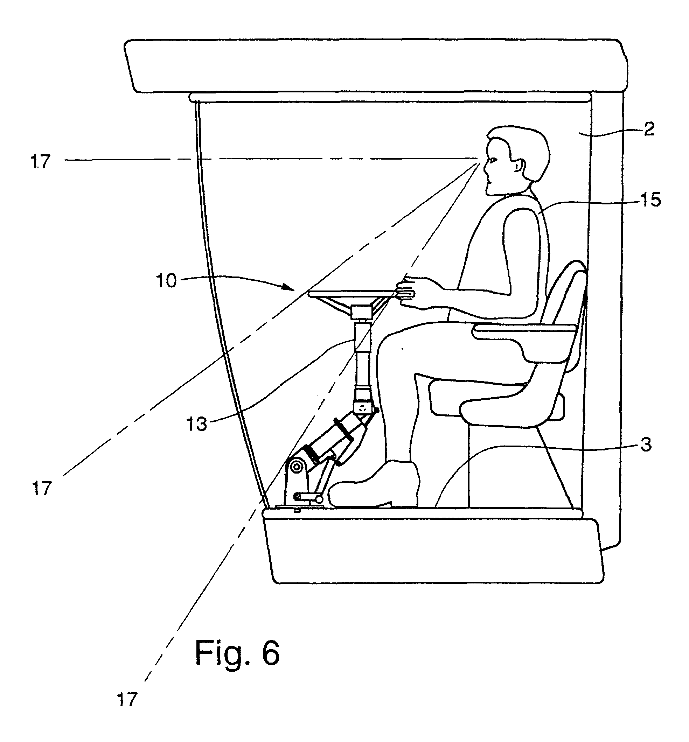

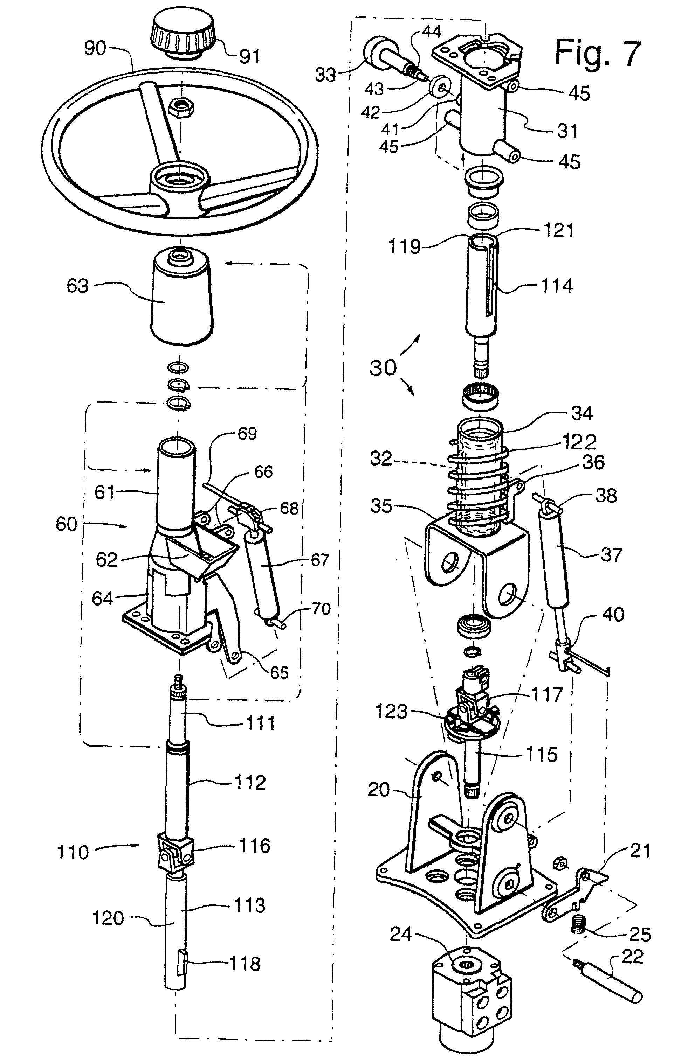

A steering column 10 accordance to the invention is shown in Figure 3. The steering column 10 is located within the cab 2 of the combine 1. The steering column is affixed to the horizontal cab floor 3 by the base support 20. Above the base support 20 is the lower pivot assembly 30. Above the lower pivot assembly 30 is the upper pivot assembly 60. Running coaxially with the upper pivot assembly 60, lower pivot assembly 30 and base support 20 is the input shaft 110 (Figure 7). Attached to the input shaft 110 is the steering wheel 90. The opposite end of the input shaft 110 is connected to the steering motor 24 located beneath the base support 20. The column 10 is capable of four types of motion. The input shaft 110 near the steering wheel 90 can telescope up and down and part of the steering column near the lower pivot assembly 30 can also telescope up and down. Furthermore, the column 10 can rotate about pivot located between the base support 20 and the lower pivot assembly 30. Part of the column 10 can also rotate about a pivot located in the upper pivot assembly 60. The entire assembly, regardless of position or height is protected by a cover. These items will be discussed in greater detail below. The range of motion offered by the steering column 10 enables the steering wheel 90 to be positioned in a manner to provide an unobstructed view 17 of the header 18. This is true regardless of whether the individual has a small build 16 (Figure 5) or large build 15 (Figure 6). Further, the steering column 10 may be positioned so that the steering wheel 90 can be in a conventional operating position 14 (Figure 4) or a horizontal operating position 12 or 13 (Figures 5 and 6). The horizontal operating position offers the driver maximum comfort and unobstructed view for an extended time period.

Affixed to the horizontal cab floor 2 is the base support 20. Located beneath the base support 20 is the steering motor 24. The steering motor 24 moves the combine wheels. Attached to the base support 20 is pedal stop 21. The pedal stop 21 is pivotally attached to the base support 20. Attached to the pedal stop is a pedal spring 25. Attached to the side of the pedal stop 21 is the foot pedal 22. The foot pedal 22, pedal stop 21 and pedal spring 25 actuate the lower gas cylinder 37. The lower gas cylinder 37 will be discussed in more detail later.

The input shaft 110 comprises several pieces. The upper telescoping shaft 111 is located within the upper input shaft 112. The upper telescoping shaft 111 and upper input shaft 112 are conventional telescoping shafts manufactured by a variety of sources. In the preferred embodiment, the shafts are manufactured by Douglas Autotech Corp. of Bronson, MI and have parts no. 48528, 48527, 48197 and 48188. Attached to the upper telescoping shaft 111 is the steering wheel 90. By turning the upper locking knob 91 located in the centre of the steering wheel, the upper telescoping shaft 111 can be raised or lowered relative to the upper input shaft 112. Affixed to the upper input shaft 112 is the first universal joint 116. The first universal joint 116 connects the upper input shaft 112 to the inner input shaft 113. The inner input shaft 113 has a torque transfer means illustrated as an elongated key 118, on its exterior circumference 120. Surrounding the inner input shaft 113 is the outer input shaft 114. A torque receiving means illustrated as key slot 121 is located on the interior circumference 119 of the outer input shaft. The inner input shaft 113 is capable of moving up or down relative to the outer input shaft 114. The elongated key 118 which is inserted into the key slot 121 transfers the rotation of the inner input shaft 113 to the outer input shaft 114. Attached to the outer input shaft 114 is the second universal joint 117. The second universal joint 117 connects the outer input shaft 114 to the lower input shaft 115. The lower input shaft 115 is connected to the steering motor 24. The lower input shaft may also have an elastic isolator 123 for dampening vibrations from the steering motor 24 and the rest of the combine 1.

The lower pivot assembly 30 consists of a first lower telescoping shaft 31 and a second lower telescoping shaft 34. The first lower telescoping shaft 31 surrounds the second lower telescoping shaft 34. The first lower telescoping shaft 31 slides relative to the second lower telescoping shaft 34. Within and coaxial to the second lower telescoping shaft 34 is the outer input shaft 114 and the inner input shaft 113. The second lower telescoping shaft 34 is attached to the lower sub-assembly 35. The lower sub-assembly 35 is pivotally attached to the base support 20. The second universal joint 117 is aligned at the pivot point between the lower sub-assembly 35 and base support 20. Also attached to the lower sub-assembly 35 is the lower cylinder mount 36. The second lower telescoping shaft 34 has vertical groove 32. The first lower telescoping shaft 31 has four cover attachment mounts 45. Additionally, the first lower telescoping shaft 31 has a threaded bore 41. Inserted in the threaded bore 41 is the clamping washer 42. A lower locking knob 33 is used in conjunction with the threaded bore 41, the clamping washer 42 and vertical groove 32 to prevent the first lower telescoping shaft 31 from sliding or rotating about the second lower telescoping shaft 34. The lower locking knob 33 has a threaded portion 44 and a shoulder 43 at the tip. The shoulder 43 is inserted into the threaded bore 41, clamping washer 42 and vertical groove 32. The threaded portion 44 and threaded bore 41 are tightened. This forces the clamping washer 42 against the second lower telescoping shaft 34 preventing the first lower telescoping shaft from translating up or down. The shoulder 43 within the vertical groove 32 prevents the first lower telescoping shaft 31 from rotating about the second lower telescoping shaft 34. In a secondary embodiment, a lift assist spring 122 is placed about the second lower telescoping shaft 34. The spring 122 exerts an upward force on the first lower telescoping shaft 31 making it easier to translate when the lower locking knob 33 is loosened.

Affixed to the first lower telescoping shaft 31 is the upper pivot assembly 60. The upper pivot assembly 60 has an upper sub-assembly 64 and an upper shaft 61 pivotally affixed to the first lower shaft 31. The first universal joint 116 is aligned at the pivot point between upper sub-assembly 64 and upper shaft 61. Attached to the upper sub-assembly 64 is the upper cylinder mount 65. Attached to the upper shaft 61 is the control bracket 62 and the upper rod mount 66. Surrounding the upper shaft 61 is the upper cover 63. The upper input shaft 112 and upper telescoping shaft 111 are located within and coaxially to the upper shaft 61.

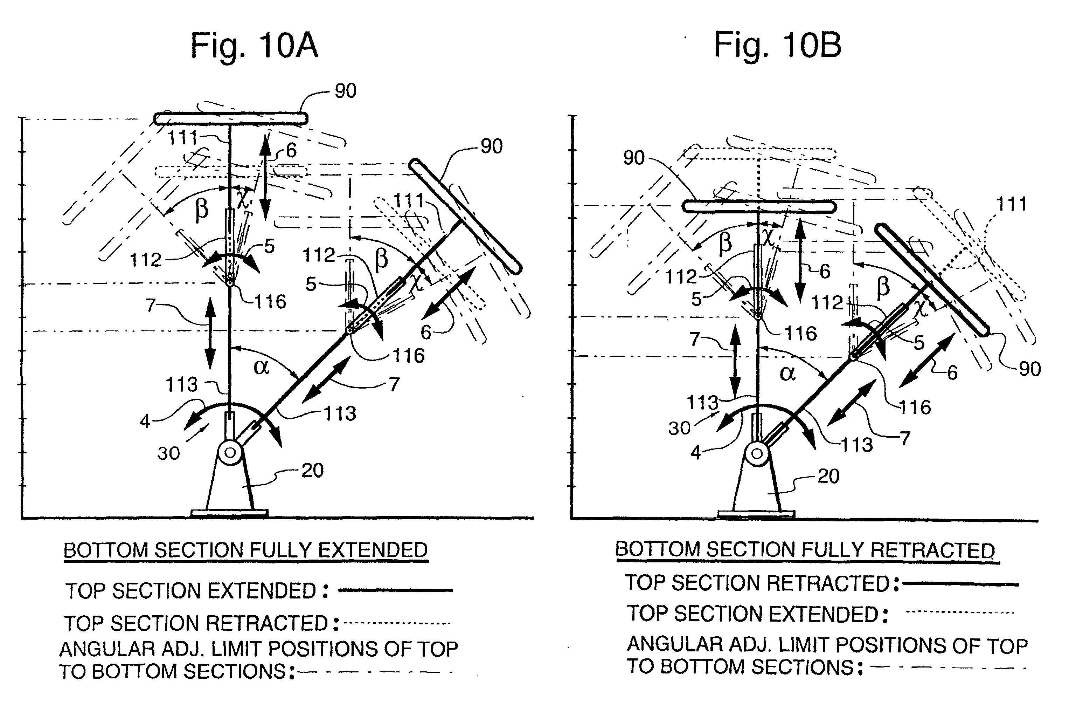

The upper gas cylinder 67 has an upper cylinder attach 70, an upper valve actuator 68, an upper rod mount 66 and an upper tilt lever 69. The upper cylinder attach 70 is pivotally attached to the upper cylinder mount 65 on the upper sub-assembly 64. The upper valve actuator 68 is pivotally attached to the upper rod mount 66. The upper tilt lever 69 controls the upper valve actuator 68. By moving the upper tilt lever 69, the gas cylinder 67 may be lengthened or shortened. This results in the upper shaft 61 pivoting, as illustrated by arrow 5 in Figure 10, about the upper sub-assembly 64. By using a gas cylinder, the upper shaft 61 may be pivoted (arrow 5) relative to the upper sub-assembly to an infinite number of positions. Relative the upper sub-assembly 64, the upper shaft 61 can rotate a total of 50 degrees. In the preferred embodiment, the range, measured from the vertical axis is 35 degrees in the forward rotation and 15 degrees in a rearward rotation. The 35 degree forward rotation is denoted by β in Figure 10 and the 15 degree rearward rotation is denoted by χ in Figure 10.

The lower gas cylinder 37 has a lower cylinder attach 38 and a lower valve actuator 40. The lower cylinder attach 38 is pivotally attached to the lower cylinder mount 36. The lower valve actuator 40 is attached to the base support 20. The lower valve actuator 40 is controlled by the pedal stop 21. The pedal stop 21 is controlled by the foot pedal 22. The pedal stop 22 and pedal spring 25 prevent an operator from placing too great a force on the foot pedal 22 that might damage the lower gas cylinder 37. When an operator depresses the foot pedal 22, a force sufficient to operate the lower valve actuator 40 is received by the valve. The excess force is transmitted to the pedal stop 21. The spring 26 returns the pedal 21 to its normal position. By depressing the foot pedal 22, the lower gas cylinder 37 may be lengthened or shortened. This results in the lower pivot assembly 30 pivoting as indicated by arrow 4 in Figure 10, about the base support 20. By using a gas cylinder, the lower pivot assembly 30 may be pivoted relative to the base support 20 to an infinite number of positions. Relative to the base support 20, the lower pivot assembly 30 can rotate (arrow 4) a total of 42 degrees. In the preferred embodiment, the range, measured from the vertical axis is 0 degrees in the forward rotation and 42 degrees in a rearward rotation. This is indicated by a in Figure 10.

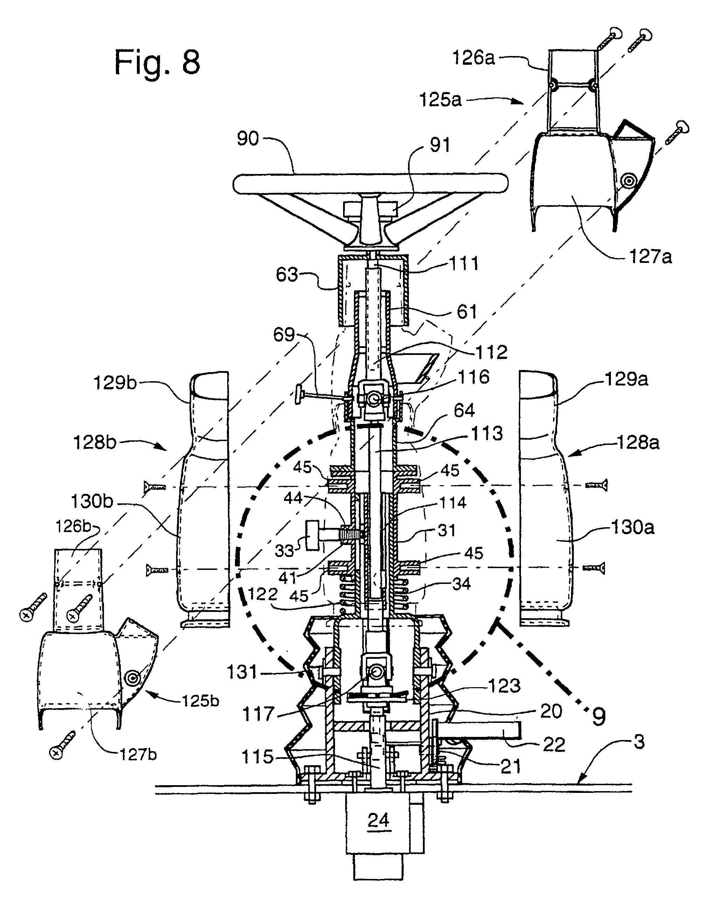

The steering column 20 has several protective covers to protect its elements. There is a flexible boot 131 attached to the horizontal cab floor 3 and surrounding the base support 20. Above the flexible boot 131 is the non-flexible lower cover 128 a and 128 b. Figure 8 illustrates the lower cover 128 before final assembly. The lower cover, prior to final assembly consists of a left-side 128 a and a mirror image right-side 128 b. In the preferred embodiment, the assembled non-flexible lower cover 128 is composed of a hard plastic. The lower cover 128 consists of a lower region 130 (a and b) and a first concave portion 129 (a and b). The first concave portion 129 (a and b) is generally spherically shaped. The lower cover 128 is attached to the cover attachment mounts 45 on the first lower telescoping shaft 31. The four attachment points are located in the lower region 130. The rim of lower region 130 is placed inside of the flexible boot 131. As the first lower telescoping shaft 31 moves relative to the second lower telescoping shaft 34, the lower cover 128 remains positioned over the both shafts.

Above the non-flexible lower cover 128 is the non-flexible middle cover 125. Figure 8 illustrates the front 125 a and mirror-image rear 125 b of the middle cover prior to final assembly. In the preferred embodiment, the non-flexible middle cover 125 is composed of a hard plastic. The middle cover 125 (a and b) consists of an upper region 126 (a and b) and a second concave portion 127 (a and b). The second concave portion 127 is generally spherically shaped and partially encompasses the first concave portion 129. The middle cover 125 is attached near the upper shaft 61 and the control bracket 62. The upper region 126 is placed inside of the upper cover 63. As the upper telescoping shaft 111 moves relative to the upper input shaft 112, the middle cover 125 remains positioned over both shafts. The second concave portion 127 is able to rotate over the first concave portion 129. The second concave portion 127 protects the top of the first concave portion 129.

To operate the steering column 10, the operator places a rotational force 11 (Figure 5) on the steering wheel 90. The force 11 is transmitted to the input shaft 110. The upper telescoping shaft 111 is attached to the upper input shaft 112 which is attached to the first universal joint 116. The first universal joint 116 is connected to the inner input shaft 113. The elongated key 118 transmits the torque to the key slot 121 in the outer input shaft 114. The outer input shaft is connected to the second universal joint 117. The second universal joint 117 is attached to the lower input shaft 115. The lower input shaft 115 is connected to the steering motor 24.

The steering column 10 can be adjusted in four ways as illustrated in Figure 10. The upper telescoping shaft 111 can translate relative to the upper input shaft 112 (see arrow 6) to raise or lower the steering wheel 90. This is accomplished by loosening the upper locking knob 91 on the steering wheel 90. The first lower telescoping shaft 31 can translate relative to the second lower telescoping shaft 34 (see arrow 7) to raise or lower the upper pivot assembly 60, upper input shaft 112, upper telescoping shaft 111 and the steering wheel 90. This is accomplished by loosening the lower locking knob 33. The steering column 10 is capable of rotating about the upper pivot assembly 60. This is accomplished by moving the upper tilt lever 69. This actuates the upper gas cylinder 67 causing the cylinder to lengthen or shorten. This causes the upper shaft 61 to pivot relative to the upper sub-assembly 64. The steering column 10 is also capable of rotating about the base support 20 and lower pivot assembly 30. This is accomplished by depressing the foot pedal 22. This actuates the lower gas cylinder 37 causing the cylinder to lengthen or shorten. This causes the lower sub-assembly 35 to pivot relative to the base support 20. The steering column can be positioned in a conventional steering position 14 (Figure 4) or in a horizontal steering position 12 or 13 (Figures 5 and 6). The steering column can be positioned for a small individual 16 or an large individual 15. The horizontal operating position offers the most comfortable steering position without an obstructed view. The steering column 10 can also be positioned to allow easy entrance and egress from the cab 2 as illustrated in Figure 3. The second lower telescoping shaft 34 is oriented in a vertical (0 degrees) position and the upper shaft is oriented at minus 35 degree position (whereby the steering wheel is forward of the vertical axis). This allows for the operator to reach or depart the seat. Figure 10 illustrates the range of motion of the steering column. Figure 10 A shows the rotation 4 about the lower pivot assembly 30 and the base support 20 while the lower telescoping shafts are fully extended (arrow 7). The upper telescoping shafts can be translated to several positions as indicated by arrow 6. The upper telescoping shafts rotates (arrow 5) to a range β+χ (50 degrees). The range is minus 35 degrees (β) towards the front of the cab and measured from the vertical axis. The range is 15 degrees (χ) towards the rear of the cab and measured from the vertical axis. Figure 10 B shows the lower telescoping shafts retracted (arrow 7). However, the rotation 4 of the lower telescoping sections and the rotation 5 of the upper telescoping shafts remain the same. The translation 7 of the lower telescoping shafts can be adjusted to an infinite range (as can the translation 6 of the upper telescoping shafts).

## Claims

1. An adjustable floor mounted steering column (10) comprising:
a base support (20) affixed to a substantially horizontal floor (3);
a lower pivot assembly (30), pivotally affixed to the base support (20) for enabling pivotal movement (4) of said lower pivot assembly (30) about a lower horizontal axis, said lower pivot assembly (30) comprising slideable means (31, 34), which enable translation (7) of said steering column (10) in a direction defined substantially by the longitudinal axis of said slideable means (31, 34) ;
an upper pivot assembly (60), pivotally affixed to the lower pivot assembly (30) for enabling pivotal movement of said upper pivot assembly (60) to said lower pivot assembly (30) about an upper horizontal axis; and
an input shaft (110) located substantially coaxially with the upper pivot assembly (60), the lower pivot assembly (30) and base support (20), said input shaft (110) having a steering wheel (90) for transmitting a rotational force (11) placed on the steering wheel (90),
**characterized in that**:
said input shaft (110) comprises an upper telescoping shaft (111) to which said steering wheel (90) is affixed and which enables translation (6) of said steering column (10) in a direction defined by the axis of said telescoping shaft (11); and
said input shaft (110) is provided with a upper locking knob (91) in the centre of said steering wheel (90) for controlling the vertical position of said upper telescoping shaft (111).

2. An adjustable steering column according to claim 1, **characterized in that in that** it further comprises:
a lower gas cylinder (37) connected to the base support (20) and the lower pivot assembly (30) and operable to pivot said lower pivot assembly (30) about the lower horizontal axis when actuated; and/or
an upper gas cylinder (67) connected to the upper pivot assembly (60) and operable to pivot said upper pivot assembly (60) about the upper horizontal axis when actuated.

3. An adjustable steering column according to claim 2, **characterized in that**:
said slideable means (31, 34) comprise a first lower telescoping shaft (31) and a second lower telescoping shaft (34), located coaxially with the first lower telescoping shaft (31), the common axis of which defining said direction of translation (7) of said steering column (10).

4. An adjustable steering column according to claim 3, **characterized in that** said lower pivot assembly (30) further comprises a lifting assist spring (122) located coaxially with the second lower telescoping shaft (34), whereby the first lower telescoping shaft (31) can be lifted.

5. An adjustable steering column according to claim 3 or 4, **characterized in that**:
said upper pivot assembly (60) comprises an upper sub-assembly (64), affixed to the first lower telescoping shaft (31), and an upper shaft (61) pivotally affixed to said upper sub-assembly (64) ;
a lower gas cylinder (37) connects the base support (20) and the second lower telescoping shaft (34); and
an upper gas cylinder (67) connects said upper sub-assembly (64) and said upper shaft (61).

6. An adjustable steering column according to claim 5, **characterized in that**:
said second lower telescoping shaft (34) has a longitudinal groove (32) therein; and
said lower pivot assembly (30) further comprises:
a lower sub-assembly (35) affixed to the second lower telescoping shaft (34);
a lower locking knob assembly having a pilot (33), a shoulder (43), a threaded portion (44) and a clamping washer (42); and
said first lower telescoping shaft (31) having a threaded bore (41) therein for receiving the clamping washer (42), whereby the first lower telescoping shaft (31) translates (7) over the second lower telescoping shaft (34), the pilot (33) being inserted into the threaded bore (41) through the clamping washer (42) and into the longitudinal groove (32) so that the threaded portion (44) and the threaded bore (41) clamp the clamping washer (42) on the second lower telescoping shaft (34) so as to prevent translation (7) and rotation between the first lower telescoping shaft (31) and second lower telescoping shaft (34).

7. An adjustable steering column according to claim 5 or 6, **characterized in that**:
said upper shaft (61) has an upper cover (63), a control bracket (62) and upper rod mount (66), said upper cover (63) being coaxial to the upper shaft (61);
said upper sub-assembly (64) has an upper cylinder mount (65); and
the upper gas cylinder (67) further comprises:
an upper cylinder attach rod (70) which is pivotally affixed to the upper cylinder mount (65); and
an upper valve actuator (68) pivotally affixed to the upper rod mount (66), said valve actuator (68) being controlled by an upper tilt lever (69).

8. An adjustable steering column according to any of the claims 5 to 7, **characterized in that**:
the base support (20) further comprises:
a pedal stop (21) pivotally affixed to the base support (20);
a pedal spring (25) affixed to the pedal stop (21); and
a foot pedal (22) affixed to the pedal stop (21);
said lower sub-assembly (35) has a lower cylinder mount (36); and
the lower gas cylinder (37) further comprises:
a lower cylinder attach rod (38) which is pivotally affixed to the lower cylinder mount (36) ; and
a lower valve actuator (40) pivotally affixed to the pedal stop (21), said valve actuator (40) being controlled by the foot pedal (22).

9. An adjustable steering column according to any of the claims 5 to 8, **characterized in that**:
said first lower telescoping shaft (31) has a plurality of cover attachment mounts (45); and
the column (10) further comprises:
a flexible boot (131) affixed to the floor (3) ;
a non-flexible lower cover (128) with a lower region (130) and a first concave portion (129), said lower cover (128) being located coaxially with the first lower telescoping shaft (31) and being affixed to the cover attachment mounts (45), a rim of said lower region (130) being inserted within the flexible boot (131); and
a non-flexible middle cover (125) having an upper region (126) and a second concave portion (127) and being located coaxially with the upper shaft (61), said second concave portion (127) partially surrounding the first concave portion (129) and said upper region (126) being inserted within an upper cover (63) coaxial to said upper shaft (61).

10. An adjustable steering column according to any of the preceding claims, **characterized in that** said base support (20) has a steering motor (24) and said input shaft (110) is affixed to said steering motor (24).

11. An adjustable steering column according to claim 10, **characterized in that** said input shaft (110) further comprises:
an inner input shaft (113), connected either directly or indirectly to the upper telescoping shaft (111) by a first universal joint (116) and having a torque transfer means (118) located on an exterior circumference (120) thereof;
an outer input shaft (114), located coaxially to the inner input shaft (113) and slideably connected thereto, the outer input shaft (114) having a torque receiving means (121) located on an interior circumference (119) thereof; and
a lower input shaft (115) connected to the outer input shaft (114) by a second universal joint (117), the lower input shaft (115) being connected to the steering motor (24).

12. An adjustable steering column according to claim 11, **characterized in that** the lower input shaft (115) has an elastic isolator (123).

13. An adjustable steering column according to claim 11 or 12, **characterized in that** said torque transfer means (118) comprises an elongated key and said torque receiving means (121) comprises a key slot whereby the elongated key (118) is inserted into the key slot (121).

14. An adjustable steering column according to any of the preceding claims, **characterized in that** an angle (α) defined by a vertical axis from the floor (3) and the longitudinal axis of said slideable means (31, 34) is in a range of 0 to 42 degrees.

15. An adjustable steering column according to any of the preceding claims, **characterized in that** an angle (β/χ) defined by a vertical axis from the floor (3) and the upper telescoping shaft (111) is in a range of minus 35 degrees to 15 degrees.

16. A combine harvester, **characterized in that** it comprises a cab (2) having a steering column (10) according to any of the preceding claims.

## Patentansprüche

1. Einstellbare, am Boden befestige Lenksäule (10), mit:
einer Basishalterung (20), die an einem im wesentlichen horizontalen Boden (3) befestigt ist,
einer unteren Schwenkbaugruppe (30), die schwenkbar an der Basishalterung (20) befestigt ist, um eine Schwenkbewegung (4) der unteren Schwenkbaugruppe (30) um eine untere horizontale Achse zu ermöglichen, wobei die untere Schwenkbaugruppe (30) verschiebbare Einrichtungen (31, 34) aufweist, die eine Translationsbewegung (7) der Lenksäule (10) in einer Richtung ermöglichen, die im wesentlichen durch die Längsachse der verschiebbaren Einrichtungen (31, 34) definiert ist,
einer oberen Schwenkbaugruppe (60), die schwenkbar an der unteren Schwenkbaugruppe (30) befestigt ist, um eine Schwenkbewegung der oberen Schwenkbaugruppe (60) gegenüber der unteren Schwenkbaugruppe (30) um eine obere horizontale Achse zu ermöglichen, und
einer Eingangswelle (110), die im wesentlichen koaxial zur oberen Schwenkbaugruppe (60), zur unteren Schwenkbaugruppe (30) und zur Basishalterung (20) angeordnet ist, wobei die Eingangswelle (110) ein Lenkrad (90) zur Übertragung einer Drehkraft (11) aufweist, die auf das Lenkrad (90) ausgeübt wird,
**dadurch gekennzeichnet, daß**:
die Eingangswelle (110) eine obere teleskopartig bewegliche Welle (111) aufweist, an der das Lenkrad (90) befestigt ist und die eine Translationsbewegung (6) der Lenksäule (10) in einer Richtung ermöglicht, die durch die Achse der teleskopartig beweglichen Welle (11) definiert ist, und
die Eingangswelle (110) mit einem oberen Verriegelungsknopf (91) in der Mitte des Lenkrades (90) versehen ist, um die vertikale Position der oberen teleskopartig beweglichen Welle (111) zu steuern.

2. Einstellbare Lenksäule nach Anspruch 1, **dadurch gekennzeichnet, daß** sie weiterhin folgendes umfaßt:
einen unteren Gasdruckzylinder (37), der mit der Basishalterung (20) und der unteren Schwenkbaugruppe (30) verbunden und betreibbar ist, um bei seiner Betätigung die untere Schwenkbaugruppe (30) um die untere horizontale Achse zu verschwenken, und/oder
einen oberen Gasdruckzylinder (67), der mit der oberen Schwenkbaugruppe (60) verbunden und betreibbar ist, um bei seiner Betätigung die obere Schwenkbaugruppe (60) um die obere horizontale Achse zu verschwenken.

3. Einstellbare Lenksäule nach Anspruch 2, **dadurch gekennzeichnet, daß**:
die verschiebbaren Einrichtungen (31, 34) eine erste untere teleskopartig bewegliche Welle (31) und eine zweite untere teleskopartig bewegliche Welle (34) umfassen, die koaxial zu der ersten unteren teleskopartigen Welle (31) angeordnet ist, wobei die gemeinsame Achse hiervon die Richtung der Translationsbewegung (7) der Lenksäule (10) definiert.

4. Einstellbare Lenksäule nach Anspruch 3, **dadurch gekennzeichnet, daß** die untere Schwenkbaugruppe (30) weiterhin eine das Anheben unterstützende Feder (122) umfaßt, die koaxial zur zweiten unteren teleskopartig beweglichen Welle (34) angeordnet ist, wodurch die erste untere teleskopartig bewegliche Welle (31) angehoben werden kann.

5. Einstellbare Lenksäule nach Anspruch 3 oder 4, **dadurch gekennzeichnet, daß**:
die obere Schwenkbaugruppe (60) eine obere Teilbaugruppe (64), die an der ersten unteren teleskopartig beweglichen Welle (31) befestigt ist, und eine obere Welle (61) umfaßt, die schwenkbar an der oberen Teilbaugruppe (64) befestigt ist,
ein unterer Gasdruckzylinder (37), die Basishalterung (20) und die zweite untere teleskopartig bewegliche Welle (34) verbindet, und
ein oberer Gasdruckzylinder (67) die obere Teilbaugruppe (64) und die obere Welle (61) verbindet.

6. Einstellbare Lenksäule nach Anspruch 5, **dadurch gekennzeichnet, daß**:
die zweite untere teleskopartig bewegliche Welle (34) eine darin ausgebildete längsverlaufende Nut (32) aufweist, und
die untere Schwenkbaugruppe (30) weiterhin folgendes umfaßt:
eine untere Teilbaugruppe (35), die an der zweiten unteren teleskopartig beweglichen Welle (34) befestigt ist,
eine untere Verriegelungsknopfbaugruppe mit einem Betätigungselement (33), einer Schulter (43), einem Gewindeabschnitt (44) und einer Klemm-Beilagscheibe (42), und
wobei die erste untere teleskopartig bewegliche Welle (31) eine darin ausgebildete Gewindebohrung (41) zur Aufnahme der Klemm-Beilagscheibe (43) aufweist, wobei die erste untere teleskopartig bewegliche Welle (31) eine Translationsbewegung (7) über der zweiten unteren teleskopartig beweglichen Welle (34) ausführt und das Betätigungselement (33) in die Gewindebohrung (41) durch die Klemm-Beilagscheibe (42) und in die längsverlaufende Nut (32) hindurch eingesetzt wird, so daß der Gewindeabschnitt (44) und die Gewindebohrung (41) die Klemm-Beilagscheibe (42) auf der zweiten unteren teleskopartig beweglichen Welle (34) festklemmen, um eine Translationsbewegung (7) und eine Drehung zwischen der unteren teleskopartig beweglichen Welle (31) und der zweiten unteren teleskopartig beweglichen Welle (34) zu verhindern.

7. Einstellbare Lenksäule nach Anspruch 5 oder 6, **dadurch gekennzeichnet, daß**:
die obere Welle (61) eine obere Verkleidung (63), einen Steuerhaltebügel (62) und eine Befestigung (66) für eine obere Kolbenstangen aufweist, wobei die obere Verkleidung (63) koaxial zur oberen Welle (61) angeordnet ist,
die obere Teilbaugruppe (64) eine Befestigung (65) für den oberen Druckzylinder aufweist, und
der obere Gasdruckzylinder (67) weiterhin folgendes umfaßt:
eine Befestigungsstange (70) des oberen Zylinders, die schwenkbar an der Befestigung (65) für den oberen Zylinder befestigt ist, und
eine obere Ventilbetätigung (68), die schwenkbar an der Befestigung (66) der oberen Kolbenstange befestigt ist, wobei die Ventilbetätigung (68) durch einen oberen Kipphebel (69) gesteuert wird.

8. Einstellbare Lenksäule nach einem der Ansprüche 5-7, **dadurch gekennzeichnet, daß**:
die Basishalterung (20) weiterhin folgendes umfaßt:
einen Pedalanschlag (21), der schwenkbar an der Basishalterung (20) befestigt ist,
eine an den Pedalanschlag (21) befestigte Pedalfeder (25), und
ein Fußpedal (22), das an dem Pedalanschlag (21) befestigt ist,
wobei die untere Teilbaugruppe (35) eine Befestigung (36) für den unteren Druckzylinder aufweist, und
der untere Gasdruckzylinder (37) weiterhin folgendes umfaßt:
eine Befestigungsstange (38) für den unteren Zylinder, die schwenkbar an der Befestigung (36) für den unteren Zylinder angebracht ist, und
eine untere Ventilbetätigung (40), die schwenkbar an dem Pedalanschlag (21) befestigt ist, wobei die Ventilbetätigung (40) durch das Fußpedal (22) gesteuert wird.

9. Einstellbare Lenksäule nach einem der Ansprüche 5-8, **dadurch gekennzeichnet, daß**:
die erste untere teleskopartig bewegliche Welle (31) eine Vieizahl von Verkleidungsbefestigungspunkten (45) aufweist, und
die Lenksäule (10) weiterhin folgendes umfaßt:
eine flexible Manschette (131), die an dem Boden (3) befestigt ist,
eine nicht-flexible untere Verkleidung (128) mit einem unteren Bereich (130) und einem ersten konkaven Abschnitt (129), wobei die untere Verkleidung (128) koaxial zu der ersten unteren teleskopartig beweglichen Welle (31) angeordnet ist und an den Verkleidungsbefestigungspunkten (45) befestigt ist, wobei ein Randbereich des unteren Bereiches (130) in das Innere der flexiblen Manschette (131) eingesetzt ist, und
eine nicht-flexible mittlere Verkleidung (125), die einen oberen Bereich (126) und einen zweiten konkaven Abschnitt (127) aufweist und koaxial zur oberen Welle (61) angeordnet ist, wobei der zweite konkave Abschnitt (127) teilweise den ersten konkaven Abschnitt (129) umgibt und der obere Bereich (126) in eine obere Verkleidung (63) koaxial zur oberen Welle (61) eingesetzt ist.

10. Einstellbare Lenksäule nach einem der vorhergehenden Ansprüche, **dadurch gekennzeichnet, daß** die Basishalterung (20) einen Lenkungsmotor (24) aufweist, und daß die Eingangswelle (110) an dem Lenkungsmotor (24) befestigt ist.

11. Einstellbare Lenksäule nach Anspruch 10, **dadurch gekennzeichnet, daß** die Eingangswelle (110) weiterin folgendes umfaßt:
eine innere Eingangswelle (113), die entweder direkt oder indirekt mit der oberen teleskopartig beweglichen Welle (111) über ein erstes Universalgelenk (116) verbunden ist und eine Drehmomentübertragungseinrichtung (118) aufweist, die auf einem Außenumfang (120) hiervon angeordnet ist,
eine äußere Eingangswelle (114), die koaxial zu der inneren Eingangswelle (113) angeordnet ist und gleitend hiermit verbunden ist, wobei die äußere Eingangswelle (114) eine Drehmoment-Aufnahmeeinrichtung (121) aufweist, die auf einem Innenumfang (119) hiervon angeordnet ist, und
eine untere Eingangswelle (115), die mit der äußeren Eingangswelle (114) über ein zweites Universalgelenk (117) verbunden ist, wobei die untere Eingangswelle (115) mit dem Lenkungsmotor (24) verbunden ist.

12. Einstellbare Lenksäule nach Anspruch 11, **dadurch gekennzeichnet, daß** die untere Eingangswelle (115) einen elastischen Isolator (123) aufweist.

13. Einstellbare Lenksäule nach Anspruch 11 oder 12, **dadurch gekennzeichnet, daß** die Drehmomentübertragungseinrichtung (118) einen langgestreckten Keil aufweist, und daß die Drehmoment-Aufnahmeeinrichtung (121) einen Keilschlitz umfaßt, wobei der langgestreckte Keil (118) in den Keilschlitz (121) eingesetzt ist.

14. Einstellbare Lenksäule nach einem der vorhergehenden Ansprüche, **dadurch gekennzeichnet, daß** ein Winkel (α), der zwischen einer vertikalen Achse von dem Boden (3) aus und der Längsachse der verschiebbaren Einrichtungen (31, 34) gebildet ist, im Bereich von 0-42 Grad liegt.

15. Einstellbare Lenksäulse nach einem der vorhergehenden Ansprüche, **dadurch gekennzeichnet, daß** ein Winkel (β/χ), der zwischen einer vertikalen Achse von dem Boden (3) aus und der oberen teleskopartig beweglichen Welle (110) aus gebildet ist, im Bereich von -35 Grad bis 15 Grad liegt.

16. Mähdrescher, **dadurch gekennzeichnet, daß** er eine Kabine (2) aufweist, die eine Lenksäule (10) gemäß einem der vorhergehenden Ansprüche aufweist.

## Revendications

1. Colonne de direction (10) réglable montée au plancher comprenant:
un support de base (20) fixé à un plancher (3) substantiellement horizontal;
un assemblage de pivot inférieur (30) , fixé avec pivotement au support de base (20) afin de permettre un pivotement (4) dudit assemblage de pivot inférieur autour d'un axe horizontal inférieur, ledit assemblage de pivot inférieur (30) comprenant des moyens de coulissement (31, 34) qui permettent une translation (7) de ladite colonne de direction (10) dans une direction définie substantiellement par l'axe longitudinal desdits moyens de coulissement (31, 34);
un assemblage de pivot supérieur (60), fixé avec pivotement à l'assemblage de pivot inférieur (30)afin de permettre un pivotement dudit assemblage de pivot supérieur (60) par rapport audit assemblage de pivot inférieur (30) autour d'un axe horizontal supérieur; et
un arbre d'attaque (110) situé substantiellement coaxialement avec l'assemblage de pivot supérieur (60), l'assemblage de pivot inférieur (30) et le support de base (20), ledit arbre d'attaque (110) possédant un volant de direction (90) afin de transmettre une force (11) de rotation appliquée au volant (90),
**caractérisé en ce que**:
ledit arbre d'attaque (110) comprend un arbre télescopique supérieur (111) auquel ledit volant (90) est fixé et qui permet une translation (6) de ladite colonne de direction (10) dans une direction définie par l'axe dudit arbre télescopique (11); et
ledit arbre d'attaque (110) est équipé d'un bouton de verrouillage (91) supérieur au centre dudit volant (90) afin de contrôler la position verticale dudit arbre télescopique supérieur (111).

2. Colonne de direction réglable selon la revendication 1, **caractérisée en ce qu'**elle comprend en outre:
un cylindre à gaz inférieur (37) relié au support de base (20) et à l'assemblage de pivot inférieur (30), et destiné à pivoter ledit assemblage de pivot inférieur (30) autour de l'axe horizontal inférieur lorsqu'il est actionné; et/ou
un cylindre à gaz supérieur (67) relié à l'assemblage de pivot supérieur (60) et destiné à pivoter ledit assemblage de pivot supérieur (60) autour de l'axe horizontal supérieur lorsqu'il est actionné.

3. Colonne de direction réglable selon la revendication 2, **caractérisée en ce que**:
lesdits moyens de coulissement (31, 34) comprennent un premier arbre télescopique inférieur (31) et un second arbre télescopique inférieur (34) positionné coaxialement avec le premier arbre télescopique inférieur (31), leur axe commun définissant ladite direction de translation (7) de ladite colonne de direction (10).

4. Colonne de direction réglable selon la revendication 3, **caractérisée en ce que** ledit assemblage de pivot inférieur (30) comprend en outre un ressort d'assistance de soulèvement (122) positionné coaxialement avec le second arbre télescopique inférieur (34), de telle sorte que le premier arbre télescopique inférieur (31) puisse être soulevé.

5. Colonne de direction réglable selon la revendication 3 ou 4, **caractérisée en ce que**:
ledit assemblage de pivot supérieur (60) comprend un sous-assemblage supérieur (64) fixé au premier arbre télescopique inférieur (31), et un arbre supérieur (61) fixé avec pivotement audit sous-assemblage supérieur (64);
un cylindre à gaz inférieur (37) relie le support de base (20) et le second arbre télescopique inférieur (34); et
un cylindre à gaz supérieur (67) relie ledit sous-assemblage supérieur (64) et ledit arbre supérieur (61).

6. Colonne de direction réglable selon la revendication 5, **caractérisée en ce que**:
ledit second arbre télescopique inférieur (34) possède une rainure longitudinale (32) y pratiquée; et
ledit assemblage de pivot inférieur (30) comprend en outre:
un sous-assemblage inférieur (35) fixé au second arbre télescopique inférieur (34);
un assemblage de bouton de verrouillage inférieur possédant un organe de positionnement (33), un épaulement (43), une partie filetée (44) et une rondelle de blocage (42); et
ledit premier arbre télescopique inférieur (31) possédant un trou fileté (41) en son sein pour recevoir la rondelle de blocage (42), avec le premier arbre télescopique inférieur (31) coulissant (7) sur le second arbre télescopique inférieur (34), l'organe de positionnement (33) étant introduit dans le trou fileté (41), au travers de la rondelle de blocage (42) et à l'intérieur de la rainure longitudinale (32) de telle sorte que la partie filetée (44) et le trou fileté (41) serrent la rondelle de blocage (42) sur le second arbre télescopique inférieur (34) de manière à éviter une translation (7) et une rotation entre le premier arbre télescopique inférieur (31) et le second arbre télescopique inférieur (34).

7. Colonne de direction réglable selon la revendication 5 ou 6, **caractérisée en ce que**:
ledit arbre supérieur (61) possède une coiffe supérieure (63), un support de contrôle (62) et un montage de tige supérieur (66), ladite coiffe supérieure (63) étant coaxiale à l'arbre supérieur (61);
ledit sous-assemblage supérieur (64) possède un montage de cylindre supérieur (65); et
le cylindre à gaz supérieur (67) comprend en outre:
une tige de fixation de cylindre supérieur (70) fixée avec pivotement sur le montage de cylindre supérieur (65); et
un actionneur de soupape supérieur (68) fixé avec pivotement sur le montage de tige supérieur (66), ledit actionneur de soupape (68) étant contrôlé par un levier d'inclinaison supérieur (69).

8. Colonne de direction réglable selon l'une quelconque des revendications 5 à 7, **caractérisée en ce que**:
le support de base (20) comprend en outre:
une butée de pédale (21) fixée avec pivotement sur le support de base (20);
un ressort de pédale (25) fixé à la butée de pédale (21); et
une pédale (22) fixée à la butée de pédale (21);
ledit sous-assemblage inférieur (35) possède un montage de cylindre inférieur (36); et
le cylindre à gaz inférieur (37) comprend en outre:
une tige de fixation de cylindre inférieur (38) fixée avec pivotement sur le montage de cylindre inférieur (36); et
un actionneur de soupape inférieur (40) fixé avec pivotement à La butée de pédale (21), ledit actionneur de soupape (40) étant contrôlé par la pédale (22).

9. Colonne de direction réglable selon l'une quelconque des revendications 5 à 8, **caractérisée en ce que**:
ledit premier arbre télescopique inférieur (31) possède une pluralité de montages de fixation de coiffe (45); et
la colonne (10) comprend en outre:
un soufflet flexible (131) fixé au plancher (3);
une coiffe inférieure rigide (128) avec une zone inférieure (130) et une première partie concave (129), ladite coiffe inférieure (128) étant disposée coaxialement avec le premier arbre télescopique inférieur (31) et étant fixée aux montages de fixation de coiffe (45), un rebord de ladite zone inférieure (130) étant inséré à l'intérieur du soufflet flexible (131); et
une coiffe médiane rigide (125) possédant une zone supérieure (26) et une seconde partie concave (127), et étant disposée coaxialement à l'arbre supérieur (61), ladite seconde partie concave (127) entourant partiellement la première partie concave (129) et ladite zone supérieure (126) étant insérée dans une coiffe supérieure (63) coaxiale audit arbre supérieur (61).

10. Colonne de direction réglable selon l'une quelconque des revendications précédentes, **caractérisée en ce que** ledit support de base (20) possède un moteur de direction (24) et ledit arbre d'attaque (110) est fixé audit moteur de direction (24).

11. Colonne de direction réglable selon la revendication 10, **caractérisée en ce que** ledit arbre d'attaque (110) comprend en outre:
un arbre d'attaque intérieur (113), relié soit directement, soit indirectement, à l'arbre télescopique supérieur (111) par un premier joint universel (116) et possédant un moyen de transmission de couple (118) disposé sur sa circonférence extérieure (120);
un arbre d'attaque extérieur (114), disposé coaxialement à l'arbre d'attaque intérieur (113) et lui étant relié avec coulissement, l'arbre d'attaque extérieur (114) possédant un moyen de reprise de couple (121) disposé sur sa circonférence intérieure (119) ; et
un arbre d'attaque inférieur (115) relié à l'arbre d'attaque extérieur (114) par un second joint universel (117), l'arbre d'attaque inférieur (115) étant relié au moteur de direction (24).

12. Colonne de direction réglable selon la revendication 11, **caractérisée en ce que** l'arbre d'attaque inférieur (115) possède un séparateur élastique (123).

13. Colonne de direction réglable selon la revendication 11 ou 12, **caractérisée en ce que** ledit moyen de transmission de couple (118) comprend une clavette allongée et ledit moyen de reprise de couple (121) comprend une rainure de clavette de sorte que la clavette allongée (118) est insérée dans la rainure de clavette (121).

14. Colonne de direction réglable selon l'une quelconque des revendications précédentes, **caractérisée en ce qu'**un angle (α) défini par un axe vertical à partir du plancher (3) et l'axe longitudinal desdits moyens de coulissement (31, 34) est compris dans une plage de 0 à 42 degrés.

15. Colonne de direction réglable selon l'une quelconque des revendications précédentes, **caractérisée en ce qu'**un angle (β/χ) défini par un axe vertical à partir du plancher (3) et l'arbre télescopique supérieur (11) est compris dans une plage de moins 35 degrés à 15 degrés.

16. Moissonneuse-batteuse, **caractérisée en ce qu'**elle comprend une cabine (2) possédant une colonne de direction (10) selon l'une quelconque des revendications précédentes.
